# EUROPEAN PATENT APPLICATION

(11) **EP 4 840 573 A1**
(43) Date of publication of application: **18.11.2026**
(21) Application number: 24917295.8
(22) Date of filing: 26.11.2024
(51) Int. Cl.: B23K 20/02, B23K 1/00, B23K 20/22, B23K 20/24, B23K 103/18

(54) **METHOD FOR JOINING DISSIMILAR MATERIALS BY USING BOTH HIP AND BRAZING**

(30) Priority: 08.01.2024 KR 20240002602
(71) Applicant: Vitzro Nextech Co., Ltd., Ansan-si, Gyeonggi-do 15603 (KR)
(72) Inventor: LEE, Jong-Man, Ansan-si Gyeonggi-do 15603 (KR); LEE, Byung-Ho, Ansan-si Gyeonggi-do 15603 (KR); HWANG, Lee-Ho, Ansan-si Gyeonggi-do 15603 (KR); CHO, Hwang-Rae, Ansan-si Gyeonggi-do 15603 (KR); KIM, Dae-Hee, Ansan-si Gyeonggi-do 15603 (KR); BAE, Byung-Hyun, Ansan-si Gyeonggi-do 15603 (KR); YOON, Young-Sik, Ansan-si Gyeonggi-do 15603 (KR)
(74) Representative: Zimmermann, Tankred Klaus
(86) International application number: PCT/KR2024/018806
(87) International publication number: WO 2025/150698

(57) **Abstract**

The present disclosure relates to a method for joining dissimilar materials using a HIP process and a brazing process simultaneously, and more particularly, to a method for joining dissimilar materials using a HIP process and a brazing process simultaneously for securing uniform quality of a joint surface when joining dissimilar materials and like materials. The configuration of the present disclosure for achieving the above object provides a method for joining dissimilar materials using a HIP process and a brazing process simultaneously, the method including a step in which joining of parts for joining is performed by hot isostatic pressing (HIP), wherein the parts for joining include a brazing filler metal.

## Description

### [TECHNICAL FIELD]

The present disclosure relates to a method for joining dissimilar materials using a HIP process and a brazing process simultaneously, and more particularly, to a method for joining dissimilar materials using a HIP process and a brazing process simultaneously for securing uniform quality of a joint surface when joining dissimilar materials and like materials.

### [BACKGROUND ART]

In the case of a heat shield used at high temperatures, such as in nuclear power or nuclear fusion technology, a material having a high melting point and a material having high thermal conductivity for cooling are joined and used. Among such materials, tungsten, which has a high melting point (3,422°C), and copper, which has high thermal conductivity for cooling efficiency, or a copper alloy having improved high-temperature properties, are frequently used. However, each material has a different coefficient of thermal expansion. In particular, in the joining of dissimilar metals having a large difference in coefficient of thermal expansion, such as tungsten and copper, the higher the temperature of the process, the more likely it is that joining fails due to the difference in expansion and contraction during heating and cooling, or that internal stress remains after the joining process so that defects occur during subsequent processes. Therefore, products in which materials having a large difference in coefficient of thermal expansion are joined, or products used in thermal shock and thermal load environments in which cooling and heating are repeated, require a joining method different from conventional methods, and diffusion bonding methods such as hot isostatic pressing (HIP) and brazing have been developed for joining such materials to each other.

Brazing basically achieves diffusion bonding by using a brazing filler between the dissimilar materials to be joined, whereas hot isostatic pressing (HIP) is characterized in that diffusion bonding is achieved in a high-temperature, highpressure environment without an interposed filler.

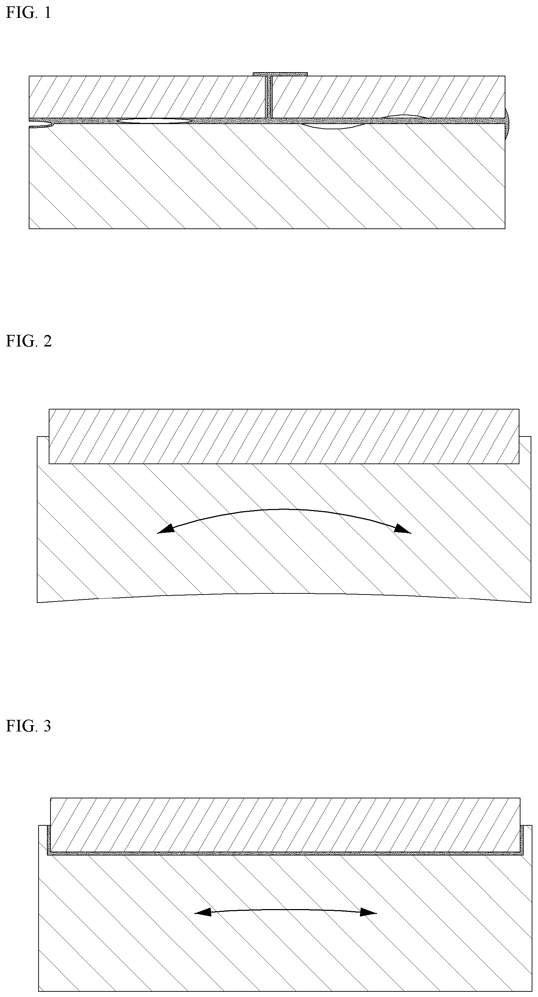

FIG. 1 is an exemplary view showing a result of joining dissimilar materials using a conventional brazing process.

Referring to FIG. 1, the brazing process has advantages in that a certain level of joint strength can be secured by using a filler metal when joining dissimilar materials, deformation is small, and the process can be performed using a general vacuum furnace.

However, the brazing process is difficult to apply to a large area, and as shown in the figure, there is a problem in that defects caused by the filler metal, such as partial filler flow, non-uniform joining, and the occurrence of voids, arise. In addition, the brazing process is sensitive to the condition of the joint surface, such as surface roughness and cleaning condition, and there is also a problem in that the load per unit area is limited depending on the capacity of the equipment.

FIG. 2 is an exemplary view showing a result of joining dissimilar materials using a conventional HIP process.

Referring to FIG. 2, the HIP process has advantages in that it can be applied to a large area owing to isostatic pressing, and the adhesion of the joint surface is excellent owing to joining by high temperature and high pressure. However, compared with the brazing process, the joint strength of the joint surface is lower, the number of process steps increases, and only equipment capable of both heating and pressing can be used.

In addition, as shown in the figure, although the HIP process produces few defects at the joint surface, when deformation is large, defects such as cracks are likely to occur in regions where the internal stress is large.

Therefore, there is a need for a method for joining dissimilar materials capable of solving these problems.

### <CITATION LIST>

(Patent Document 1) Korean Patent Application Publication No. 10-2007-0108496

### [DETAILED DESCRIPTION OF THE INVENTION]

### [TECHNICAL PROBLEM TO BE SOLVED]

An object of the present disclosure for solving the above problems is to provide a method for joining dissimilar materials using a HIP process and a brazing process simultaneously, for securing uniform quality of a joint surface when joining dissimilar materials and like materials, and for preventing deformation even when stress or the like occurs.

The technical problems to be achieved by the present disclosure are not limited to the technical problems mentioned above, and other technical problems not mentioned will be clearly understood by those of ordinary skill in the art to which the present disclosure pertains from the following description.

### [TECHNICAL SOLUTION]

The configuration of the present disclosure for achieving the above object provides a method for joining dissimilar materials using a HIP process and a brazing process simultaneously, the method including: a step in which pretreatment of parts for joining is performed; a step in which the pretreated parts for joining are assembled; a step in which the parts for joining are canned; a step in which a vacuum test of the canned parts for joining is performed; and a step in which joining of the parts for joining in a vacuum state is performed by hot isostatic pressing (HIP) and brazing, wherein the parts for joining include a brazing filler metal.

In an embodiment of the present disclosure, in the step in which the pretreatment of the parts for joining is performed, the parts for joining may include a tungsten base material, and the tungsten base material may be heat-treated at a temperature of 950°C to 1,050°C for 3 hours or more under a vacuum atmosphere.

In an embodiment of the present disclosure, in the step in which the pretreatment of the parts for joining is performed, cleaning of the parts for joining may be performed.

In an embodiment of the present disclosure, in the step in which the pretreated parts for joining are assembled, the parts for joining may be assembled by being stacked in the order of a copper alloy block, a copper plate, a brazing filler, a tungsten block, a molybdenum sheet, and a canning cover.

In an embodiment of the present disclosure, in the step in which the pretreated parts for joining are assembled, the canning cover may be positioned at a stepped portion of the copper alloy block.

In an embodiment of the present disclosure, the brazing filler metal may be a nickel-copper (Ni-Cu) alloy.

In an embodiment of the present disclosure, the tungsten block may be provided as a plurality.

In an embodiment of the present disclosure, in the step in which the parts for joining are canned, the inside of the parts for joining may be sealed such that a vacuum atmosphere is maintained.

In an embodiment of the present disclosure , in the step in which the joining of the parts for joining in the vacuum state is performed by hot isostatic pressing (HIP) and brazing, the parts for joining may be heat-treated at a temperature of 950°C to 1,050°C for 3 hours or more under an argon (Ar) atmosphere, while an isostatic pressure of 900 to 1,100 bar is simultaneously applied.

In an embodiment of the present disclosure, after the step in which the joining of the parts for joining in the vacuum state is performed by hot isostatic pressing (HIP) and brazing, the method may include a step in which shape machining of the joined parts for joining is performed.

### [ADVANTAGEOUS EFFECTS OF THE INVENTION]

The effect of the present disclosure according to the above configuration is that the adhesion of the joint surface achieved by high temperature and high pressure is excellent, so that the joint strength is superior to that of conventional examples in which only the brazing process or only the HIP process is performed alone.

In addition, according to the present disclosure, application to a large area is possible owing to isostatic pressing, and deformation of the joint surface can be minimized.

In addition, according to the present disclosure, during the HIP and brazing processes, the brazing filler fills the joint interface without gaps and increases the joint area, thereby increasing the joint strength.

In addition, according to the present disclosure, cracking and breakage of the tungsten base material can be prevented, and joint integrity against thermal shock after joining can be secured.

In addition, according to the present disclosure, the agglomeration and spreading of the filler metal that occur during the HIP and brazing processes do not occur, so that defects are reduced.

The effects of the present disclosure are not limited to the above-mentioned effects, and should be understood to include all effects that can be inferred from the configuration of the invention described in the detailed description of the present disclosure or in the claims.

### [BRIEF DESCRIPTION OF THE DRAWINGS]

FIG. 1 is an exemplary view showing a result of joining dissimilar materials using a conventional brazing process.
FIG. 2 is an exemplary view showing a result of joining dissimilar materials using a conventional HIP process.
FIG. 3 is an exemplary view showing a result of joining dissimilar materials according to an embodiment of the present disclosure.
FIG. 4 is a flowchart of a method for joining dissimilar materials using a HIP process and a brazing process simultaneously according to an embodiment of the present disclosure.
FIG. 5 is an exemplary process view of a method for joining dissimilar materials using a HIP process and a brazing process simultaneously according to an embodiment of the present disclosure.
FIG. 6 is an exemplary view of canned parts for joining according to an embodiment of the present disclosure.
FIG. 7 is a graph of pressure and temperature changes over time in the step in which joining of the parts for joining in a vacuum state is performed by hot isostatic pressing (HIP) and brazing according to an embodiment of the present disclosure.
FIG. 8 is a graph comparing joint strength and joint area based on the shear strength of a copper material.

### [BEST MODE]

A most preferred embodiment according to the present disclosure includes: a step in which pretreatment of parts for joining is performed; a step in which the pretreated parts for joining are assembled; a step in which the parts for joining are canned; a step in which a vacuum test of the canned parts for joining is performed; and a step in which joining of the parts for joining in a vacuum state is performed by hot isostatic pressing (HIP) and brazing, wherein the parts for joining include a brazing filler metal.

### [DETAILED DESCRIPTION]

Hereinafter, the present disclosure will be described with reference to the accompanying drawings. However, the present disclosure may be implemented in various different forms and is therefore not limited to the embodiments described herein. In the drawings, parts irrelevant to the description have been omitted in order to clearly describe the present disclosure, and similar reference numerals are assigned to similar parts throughout the specification.

Throughout the specification, when a part is said to be "connected (linked, in contact with, or coupled)" to another part, this includes not only the case where the part is "directly connected" but also the case where the part is "indirectly connected" with another member interposed therebetween. In addition, when a part is said to "include" a component, this means that the part may further include other components, rather than excluding other components, unless specifically stated to the contrary.

The terms used in this specification are merely used to describe specific embodiments and are not intended to limit the present disclosure. A singular expression includes a plural expression unless the context clearly indicates otherwise. In this specification, terms such as "include" or "have" are intended to designate the presence of features, numbers, steps, operations, components, parts, or combinations thereof described in the specification, and should be understood as not precluding the presence or addition of one or more other features, numbers, steps, operations, components, parts, or combinations thereof.

In addition, terms such as "part," "unit," and "module" described in the specification mean a unit that processes at least one function or operation, which may be implemented as hardware, software, or a combination of hardware and software.

In addition, in this specification, when a step is said to be located "before" or "after" another step, this includes not only the case where the step is in a direct chronological relationship with the other step, but also the case where the steps are in an indirect chronological relationship in which the order of the two steps may be changed, such as where another step intervenes between the steps.

Hereinafter, embodiments of the present disclosure will be described in detail with reference to the accompanying drawings.

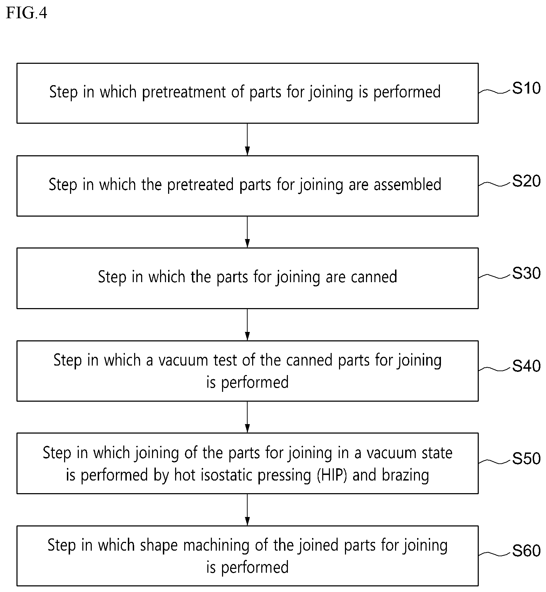

FIG. 3 is an exemplary view showing a result of joining dissimilar materials according to an embodiment of the present disclosure, and FIG. 4 is a flowchart of a method for joining dissimilar materials using a HIP process and a brazing process simultaneously according to an embodiment of the present disclosure.

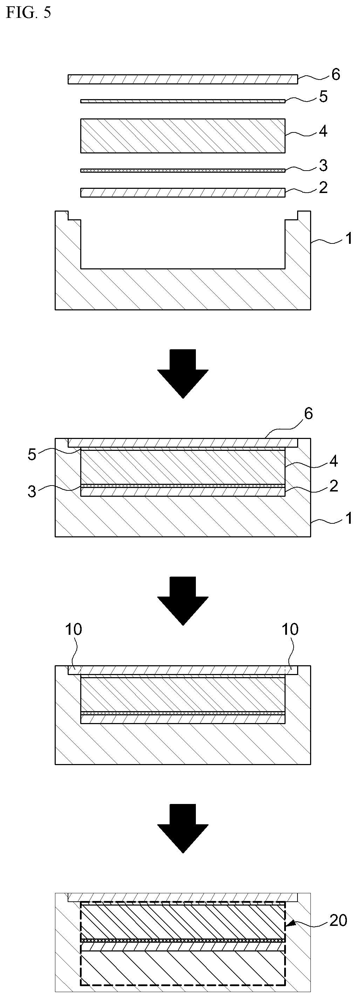

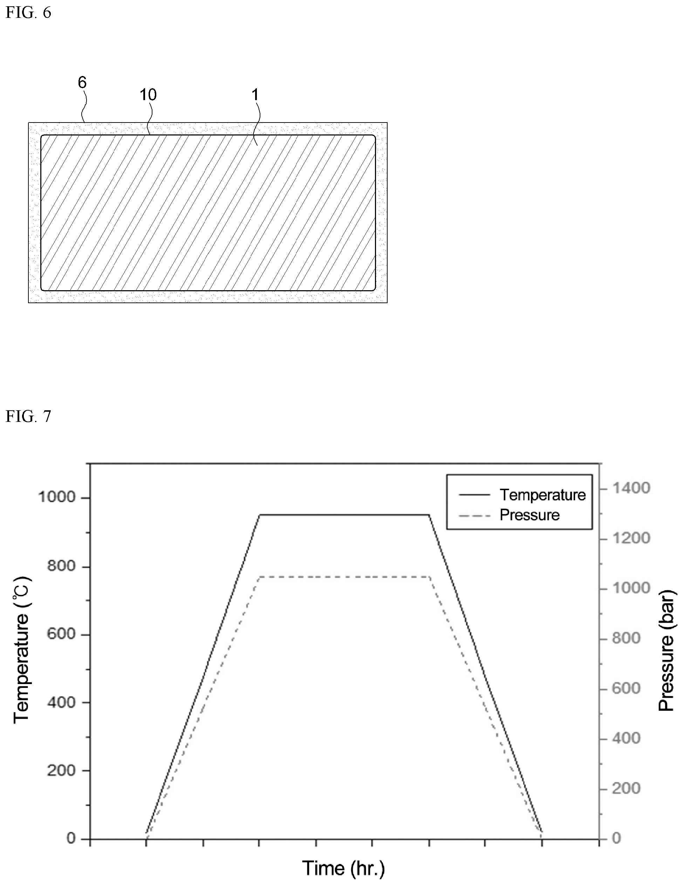

FIG. 5 is an exemplary process view of a method for joining dissimilar materials using a HIP process and a brazing process simultaneously according to an embodiment of the present disclosure, and FIG. 6 is an exemplary view of canned parts for joining according to an embodiment of the present disclosure.

Referring to FIGS. 3 to 6, the method for joining dissimilar materials using a HIP process and a brazing process simultaneously may include: a step (S10) in which pretreatment of parts for joining is performed; a step (S20) in which the pretreated parts for joining are assembled; a step (S30) in which the parts for joining are canned; a step (S40) in which a vacuum test of the canned parts for joining is performed; a step (S50) in which joining of the parts for joining in a vacuum state is performed by hot isostatic pressing (HIP) and brazing; and a step (S60) in which shape machining of the joined parts for joining is performed.

In the step (S10) in which the pretreatment of the parts for joining is performed, pretreatment such as cleaning and heat treatment of the parts for joining may be performed.

Specifically, the parts for joining according to the embodiment include a copper alloy block (1), a copper plate (2), a brazing filler (3), a tungsten block (4), a molybdenum sheet (5), and a canning cover (6), and in the step (S10) in which the pretreatment of the parts for joining is performed, pretreatment in which the parts for joining are cleaned and dried may be performed.

In addition, in the step (S10) in which the pretreatment of the parts for joining is performed, the tungsten block (4) may be heat-treated at a temperature of 950°C to 1,050°C for 3 hours or more under a vacuum atmosphere.

The copper alloy block (1) may be provided in the form of a box with an open top so that the other materials can be stacked inside the copper alloy block (1). The copper alloy block (1) may be provided such that an upper edge thereof is formed in a staircase shape so that the materials can be sealed in a sequentially stacked state.

The copper plate (2) is provided to be inserted into the lowermost inner portion of the copper alloy block (1), and may be provided in a plate shape made of a copper (Cu) metal.

The brazing filler (3) is provided in a shape corresponding to the shape of the copper plate (2) so as to be stacked on top of the copper plate (2) for brazing, and may be made of a nickel-copper (Ni-Cu) alloy.

The tungsten block (4) may be provided to be stacked on top of the brazing filler (3), and may be made of tungsten (W).

The molybdenum sheet (5) is made of molybdenum (Mo), and may be provided to be stacked on top of the tungsten block (4).

The canning cover (6) is provided to be stacked on top of the molybdenum sheet (5), and may be provided to cover the entire top of the molybdenum sheet (5). The canning cover (6) may be provided to be positioned at the stepped portion of the staircase shape of the copper alloy block (1).

In the step (S20) in which the pretreated parts for joining are assembled, the parts for joining provided as described above may be sequentially stacked and assembled in the order of the copper alloy block (1), the copper plate (2), the brazing filler (3), the tungsten block (4), the molybdenum sheet (5), and the canning cover (6).

At this time, the canning cover (6) may be positioned at the stepped portion of the copper alloy block (1).

The tungsten block (4) and the molybdenum sheet (5) can provide an effect of preventing cracking of the tungsten.

Specifically, molybdenum, together with tungsten, is a metal having a very high melting point, and atomic diffusion does not readily occur in molybdenum at temperatures at which the atoms of other metal materials diffuse readily. In addition, since molybdenum has a low vapor pressure at high temperatures, it does not release gas while diffusion bonding under high temperature and high pressure is in progress; rather, it combines with the surrounding oxygen and absorbs the oxygen released from the base material, thereby improving the joining performance.

The tungsten block (4) may be provided as a plurality of blocks stacked so as to form a plurality of rows and columns.

In the step (S30) in which the parts for joining are canned, the assembled parts for joining may be canned by being sealed while a vacuum atmosphere is maintained.

Specifically, in the step (S30) in which the parts for joining are canned, the portion of the canning cover (6) resting on the stepped portion of the copper alloy block (1) may be welded to form a welded portion (10). As the parts for joining are sealed in this way, the inside of the copper alloy block (1), the top of which is covered by the canning cover (6), may be brought into a vacuum state.

Next, in the step (S40) in which the vacuum test of the canned parts for joining is performed, a vacuum test may be performed on the inside of the copper alloy block (1) that has been brought into the vacuum state in this way.

FIG. 7 is a graph of pressure and temperature changes over time in the step in which the joining of the parts for joining in the vacuum state is performed by hot isostatic pressing (HIP) and brazing according to an embodiment of the present disclosure.

Referring further to FIG. 7, in the step (S50) in which the joining of the parts for joining in the vacuum state is performed by hot isostatic pressing (HIP) and brazing, hot isostatic pressing and brazing may act simultaneously on the canned parts for joining in the vacuum atmosphere state to achieve joining.

At this time, the parts for joining are heat-treated at a temperature of 950°C to 1,050°C for 3 hours or more under an argon (Ar) atmosphere, while an isostatic pressure of 900 to 1,100 bar is simultaneously applied to achieve joining.

Next, in the step (S60) in which the shape machining of the joined parts for joining is performed, post-processing such as shape machining may be performed on the parts for joining for which joining has been completed in this way, so that a post-processed portion (20) is formed.

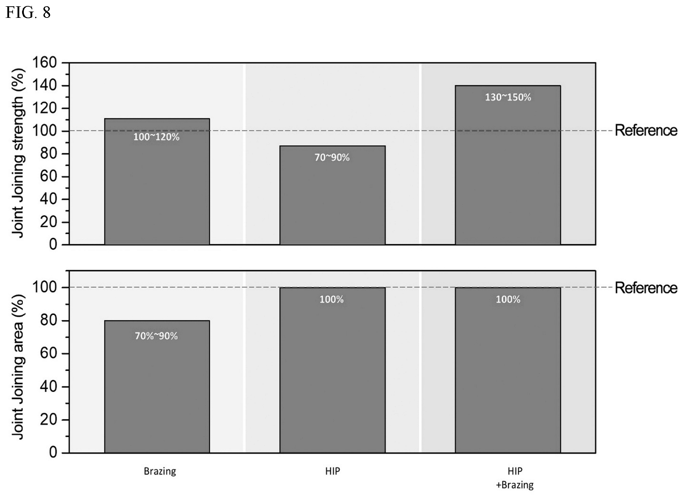

FIG. 8 is a graph comparing joint strength and joint area based on the shear strength of a copper material.

Referring to FIG. 8, based on the shear strength of the copper material (100%), the material joined by the brazing process has a shear strength of 100% to 120% at the joint, and the material joined by the HIP process has a shear strength of about 70% to 90% at the joint.

However, it can be confirmed that the material joined according to the present disclosure has a shear strength approaching 130 to 150%.

In addition, referring to FIG. 8, based on a defect-free joint area (100%), the material joined by the brazing process has a joint area of 90% or less at the joint, and the material joined by the HIP process has a joint area of 100% at the joint.

In comparison, it can be confirmed that the material joined according to the present disclosure has a joint area of 100%.

As such, it can be confirmed that the present disclosure can secure the required joint properties while compensating for the disadvantages of the brazing process, which is unstable with a joint area of 90% or less, and of the HIP process, which has low joint strength.

In addition, according to the present disclosure, application to a large area is possible owing to isostatic pressing, and deformation of the joint surface can be minimized.

Furthermore, according to the present disclosure, cracking and breakage of the tungsten block (4) can be prevented, joint integrity against thermal shock after joining can be secured, and defects caused by the agglomeration and spreading of the filler that occur during the brazing process are eliminated.

Although the above description of the present disclosure has been made with reference to limited drawings, it is for illustration only, and those of ordinary skill in the art to which the present disclosure pertains will understand that the present disclosure can be easily modified into other specific forms without changing the technical idea or essential features of the present disclosure. Therefore, the embodiments described above should be understood as illustrative in all respects and not restrictive. For example, each component described as a single type may be implemented in a distributed manner, and likewise, components described as distributed may be implemented in a combined form. In addition, the described techniques may be performed in an order different from the described method.

The embodiments described in this specification and the accompanying drawings merely illustrate a part of the technical idea included in the present disclosure. Therefore, the scope of the present disclosure is defined by the claims set forth below, and all changes or modified forms derived from the meaning and scope of the claims and the concept of equivalents thereof should be interpreted as being included in the scope of the present disclosure.

### <Reference Signs>

1: Copper alloy block
2: Copper plate
3: Brazing filler
4: Tungsten block
5: Molybdenum sheet
6: Canning cover
10: Welded portion
20: Post-processed portion

## Claims

1. A method for joining dissimilar materials using a HIP process and a brazing process simultaneously, the method comprising:
a step S10 in which pretreatment of parts for joining is performed;
a step S20 in which the pretreated parts for joining are assembled;
a step S30 in which the parts for joining are canned;
a step S40 in which a vacuum test of the canned parts for joining is performed; and
a step S50 in which joining of the parts for joining in a vacuum state is performed by hot isostatic pressing (HIP) and brazing,
wherein the parts for joining include a brazing filler metal.

2. The method for joining dissimilar materials using a HIP process and a brazing process simultaneously according to claim 1,
wherein, in the step S10 in which the pretreatment of the parts for joining is performed,
the parts for joining include a tungsten block, and the tungsten block is heat-treated at a temperature of 950°C to 1,050°C for 3 hours or more under a vacuum atmosphere.

3. The method for joining dissimilar materials using a HIP process and a brazing process simultaneously according to claim 1,
wherein, in the step S10 in which the pretreatment of the parts for joining is performed, cleaning of the parts for joining is performed.

4. The method for joining dissimilar materials using a HIP process and a brazing process simultaneously according to claim 1,
wherein, in the step S20 in which the pretreated parts for joining are assembled,
the parts for joining are assembled by being stacked in the order of a copper alloy block, a copper plate, a brazing filler, a tungsten block, a molybdenum sheet, and a canning cover.

5. The method for joining dissimilar materials using a HIP process and a brazing process simultaneously according to claim 4,
wherein, in the step S20 in which the pretreated parts for joining are assembled,
the canning cover is positioned at a stepped portion of the copper alloy block.

6. The method for joining dissimilar materials using a HIP process and a brazing process simultaneously according to claim 4,
wherein the brazing filler metal is a nickel-copper (Ni-Cu) alloy.

7. The method for joining dissimilar materials using a HIP process and a brazing process simultaneously according to claim 4,
wherein the tungsten block is provided as a plurality.

8. The method for joining dissimilar materials using a HIP process and a brazing process simultaneously according to claim 1,
wherein, in the step S30 in which the parts for joining are canned, the inside of the parts for joining is sealed such that a vacuum atmosphere is maintained.

9. The method for joining dissimilar materials using a HIP process and a brazing process simultaneously according to claim 1,
wherein, in the step S50 in which the joining of the parts for joining in the vacuum state is performed by hot isostatic pressing (HIP) and brazing,
the parts for joining are heat-treated at a temperature of 950°C to 1,050°C for 3 hours or more under an argon (Ar) atmosphere, while an isostatic pressure of 900 to 1,100 bar is simultaneously applied.

10. The method for joining dissimilar materials using a HIP process and a brazing process simultaneously according to claim 1, further comprising:
after the step S50 in which the joining of the parts for joining in the vacuum state is performed by hot isostatic pressing (HIP) and brazing,
a step S60 in which shape machining of the joined parts for joining is performed.
